# EUROPEAN PATENT SPECIFICATION

(11) **EP 3 211 698 B1**
(45) Date of publication and mention of the grant of the patent: **06.02.2019**
(21) Application number: 15853056.8
(22) Date of filing: 16.09.2015
(51) Int. Cl.: H01M 4/86, C02F 3/28, H01M 4/96, H01M 8/16

(54) **ELECTRODE, FUEL CELL AND WATER TREATMENT DEVICE**
ELEKTRODE, BRENNSTOFFZELLE UND WASSERBEHANDLUNGSVORRICHTUNG
ÉLECTRODE, PILE À COMBUSTIBLE ET DISPOSITIF DE TRAITEMENT D'EAU

(30) Priority: 20.10.2014 JP 2014213930; 07.04.2015 JP 2015078177
(43) Date of publication of application: 30.08.2017
(73) Proprietor: Panasonic Corporation, Kadoma-shi, Osaka 571-8501 (JP)
(72) Inventor: YOSHIKAWA, Naoki, Osaka-shi, Osaka 540-6207 (JP); KITADE, Yuuki, Osaka-shi, Osaka 540-6207 (JP)
(74) Representative: Müller-Boré & Partner Patentanwälte PartG mbB
(86) International application number: PCT/JP2015/004732
(87) International publication number: WO 2016/063455

(56) References cited:
- WO-A1-2015/045217
- WO-A1-2016/038866
- WO-A2-02/35620
- JP-A- 2009 295 488
- JP-A- 2015 032 536
- JP-A- 2015 046 361
- US-A1- 2002 090 543
- US-A1- 2004 115 499
- US-A1- 2011 229 742

## Description

The present invention relates to an electrode, a fuel cell, and a water treatment device. More particularly, the present invention relates to an electrode capable of purifying wastewater and generating electrical energy, and a fuel cell and a water treatment device using the electrode.

Microbial fuel cells that generate electrical energy by using biomass are in increasing demand as sustainable energy. The microbial fuel cells are superior systems capable of converting organic matter into electrical energy by use of metabolism of microorganisms, so as to collect energy while treating the organic matter. Such microbial fuel cells are still required to be improved because the amount of electric power generated by microorganisms is quite small, and output current density is low.

A conventional microbial fuel cell (a bacterial fuel cell) is disclosed, the cell including a plurality of anodes and a plurality of cathodes in liquid communication with a liquid to be purified (for example, refer to Patent Literature 1). The plurality of anodes and cathodes each include a metal electrical conductor arranged to be electrically coupled across a load in an electrical circuit. The plurality of anodes and cathodes each further include an electrically conductive coating provided between the metal electrical conductor and the liquid to be purified, so as to mutually seal the liquid and the electrical conductor from each other.

Patent Literature 1: Japanese Unexamined Patent Application Publication No. 2012-507828
US 2002/090543 A1 describes a solid polymer electrolyte fuel cell and a method for producing an electrode thereof.

The microbial fuel cell disclosed in Patent Literature 1 suppresses degradation of battery properties due to the use of the electrically conductive coating for preventing corrosion of the metal electrical conductor. However, the battery properties may be degraded because the characteristics of the metal electrical conductor having low resistivity cannot be taken advantage of, since the electrically conductive coating has higher electrical resistance than the metal electrical conductor. Even when the electrically conductive coating is provided on the metal electrical conductor, the metal electrical conductor may be corroded along with a long-term use, which leads to a decrease in performance of the metal electrical conductor.

The present invention has been made in view of the above-described conventional problems. An object of the present invention is to provide an electrode with decreased electrical resistance and improved battery properties, and a fuel cell and a water treatment device using the electrode.

In order to solve the problems described above, an electrode according to a first aspect of the present invention includes a first diffusion layer having water repellency, a second diffusion layer supporting a catalyst thereon, and an oxygen-permeable layer having oxygen permeability and interposed between the first diffusion layer and the second diffusion layer. The second diffusion layer includes a sheet-like carbon material. The second diffusion layer includes graphite, and graphene layers in the graphite are arranged in a direction perpendicular to a stacking direction of the first diffusion layer, the second diffusion layer, and the oxygen-permeable layer.

A fuel cell according to a second aspect of the present invention includes an anode supporting microorganisms, an ion transfer layer permeable to hydrogen ions, and a cathode being the electrode according to the first aspect and separated from the anode with the ion transfer layer interposed therebetween.

A water treatment device according to a third aspect of the present invention includes an anode supporting microorganisms for purifying a liquid to be treated, an ion transfer layer permeable to hydrogen ions, and a cathode being the electrode according to the first aspect and separated from the anode with the ion transfer layer interposed therebetween.

[Fig. 1] Fig. 1 is a schematic cross-sectional view showing an example of an electrode according to an embodiment of the present invention.
[Fig. 2] Fig. 2 is a graph showing a relationship between ISO air permeance of the electrode according to the embodiment of the present invention and a maximum output power of a fuel cell using the electrode.
[Fig. 3] Fig. 3 is a graph showing a relationship between the ISO air permeance of the electrode according to the embodiment of the present invention and a density of the electrode.
[Fig. 4] Fig. 4(a) is a schematic cross-sectional view showing another example of the electrode according to the embodiment of the present invention, and Fig. 4(b) is an enlarged view of a part indicated by reference sign A in Fig. 4(a).
[Fig. 5] Fig. 5 is a schematic view showing a fuel cell according to an embodiment of the present invention.
[Fig. 6] Fig. 6 is an exploded perspective view showing a fuel cell unit in the fuel cell.

An electrode according to the present embodiment, and a fuel cell and a water treatment device using the electrode will be described in detail below. The dimensions in the drawings may be exaggerated for illustration purposes, and are not necessarily drawn to scale.

### [Electrode]

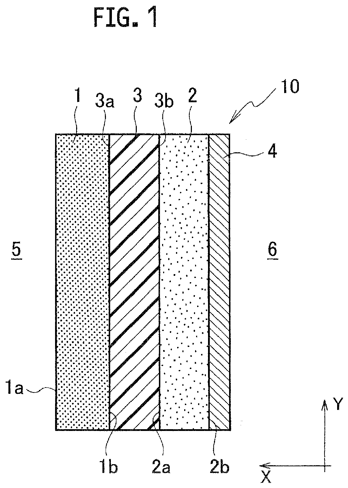

As shown in Fig. 1, an electrode 10 according to the present embodiment includes a first diffusion layer 1 having water repellency, a second diffusion layer 2 supporting a catalyst, and an oxygen-permeable layer 3 having oxygen permeability and interposed between the first diffusion layer 1 and the second diffusion layer 2. More particularly, the electrode 10 has a structure in which the first diffusion layer 1 is arranged in contact with one surface 3a of the oxygen-permeable layer 3, and the second diffusion layer 2 is arranged in contact with the other surface 3b of the oxygen-permeable layer 3 opposite to the surface 3a.

### (First diffusion layer)

The first diffusion layer 1 is in contact with a gas phase 5, so as to diffuse gas contained in the gas phase 5 and supply the gas substantially evenly to the surface 3a of the oxygen-permeable layer 3. The first diffusion layer 1 is therefore preferably a porous body so as to diffuse the gas. The first diffusion layer 1 preferably has water repellency. The first diffusion layer 1 having water repellency can prevent pores of the porous body from being blocked due to water condensation to result in a decrease of gas diffusing performance. Further, as described below, when the electrode 10 is used for a fuel cell or a water treatment device, the first diffusion layer 1 contributes to better contact with the gas phase, since a liquid phase hardly permeates deeply into the first diffusion layer 1.

The first diffusion layer 1 may be formed of any material which can diffuse the gas contained in the gas phase 5. The material used for the first diffusion layer 1 may be at least one material selected from the group consisting of polyethylene, polypropylene, nylon, and polytetrafluoroethylene. These materials facilitate a formation of a porous body and have high water repellency, so as to enhance the gas diffusing performance while preventing a block of the pores. The first diffusion layer 1 is also preferably formed of at least one material selected from the group consisting of a woven fabric, a nonwoven fabric, and a film including at least one of the materials listed above. When the first diffusion layer 1 is formed of a film including at least one of the materials listed above, the film is preferably provided with a plurality of penetration holes in the stacking direction X of the first diffusion layer 1, the second diffusion layer 2, and the oxygen-permeable layer 3.

The first diffusion layer 1 may be subjected to water repellent treatment with a water repellent as necessary in order to further improve the water repellency. For example, the porous body of the first diffusion layer 1 may be coated with a water repellent such as polytetrafluoroethylene (PTFE) to improve the water repellency.

As shown in Fig. 1, the first diffusion layer 1 is preferably in contact with the oxygen-permeable layer 3 so as to efficiently supply gas to the surface 3a of the oxygen-permeable layer 3. More particularly, a surface 1b of the first diffusion layer 1 is preferably opposed to and in contact with the surface 3a of the oxygen-permeable layer 3. The gas is therefore diffused over and directly supplied to the surface 3a of the oxygen-permeable layer 3 to improve the oxygen permeability. A gap may be provided between the surface 1b of the first diffusion layer 1 and the surface 3a of the oxygen-permeable layer 3, as long as the gas is supplied to the surface 3a of the oxygen-permeable layer 3 appropriately.

### (Second diffusion layer)

The electrode 10 according to the present embodiment includes, in addition to the first diffusion layer 1, the second diffusion layer 2 supporting a catalyst 4. The second diffusion layer 2 allows electrons generated by a local cell reaction, as described below, to communicate between the second diffusion layer 2 and an external circuit. The second diffusion layer 2 thus includes a sheet-like carbon material. Since a carbon material is hardly corroded when brought into contact with a liquid to be treated and has low electrical resistivity, high electrical conductivity can be ensured for a long period of time.

Table 1 indicates data of electrical resistivity of typical metal materials and carbon materials. As indicated in Table 1, a graphite sheet has the lowest electrical resistivity in the carbon materials, but has higher electrical resistivity than a stainless steel plate having a thickness of 1 mm. However, metal materials are not used in a bulk state, namely in the form of a metal plate, but in most cases used in the form of metal mesh or wire. Thus, the electrical resistivity of the carbon materials is substantially the same as that of the metal materials. The carbon materials can therefore ensure high electrical conductivity for a long period of time, since the carbon materials are hardly corroded even when brought into contact with a liquid to be treated, and have substantially the same electrical resistivity as the stainless steel mesh, as indicated in Table 1.

**[Table 1]**

| Electrode Material | | Measured Resistivity (Ω·cm) |
|---|---|---|
| Metal Material | Stainless Steel Plate (SUS316) (t=1.0) | 4.7×10⁻⁶ |
| | Stainless Steel Mesh (SUS316) (150 mesh, ϕ=0.06) | 3.2×10⁻⁴ |
| Carbon Material | Carbon Paper | 9.4× 10⁻⁴ |
| | Carbon Cloth | 3.3× 10⁻³ |
| | Graphite Sheet | 2.5 ×10⁻⁴ |

The second diffusion layer includes graphite. The sheet-like carbon material included in the second diffusion layer 2 may be at least one material selected from the group consisting of carbon paper, carbon cloth, and a graphite sheet, as long as graphite is included in the second diffusion layer. The second diffusion layer 2 may be either formed of at least one material selected from the group consisting of carbon paper, carbon cloth, and a graphite sheet, as long as graphite is included in the second diffusion layer, or formed of a stacked body including a plurality of these materials stacked on one another, as long as graphite is included in the second diffusion layer. Since the carbon paper as a nonwoven fabric of carbon fibers, the carbon cloth as a woven fabric of carbon fibers, and the graphite sheet including graphite have high corrosion resistance and have substantially the same electrical resistivity as the metal materials, as indicated in Table 1, the carbon materials can provide the electrode with both durability and electrical conductivity.

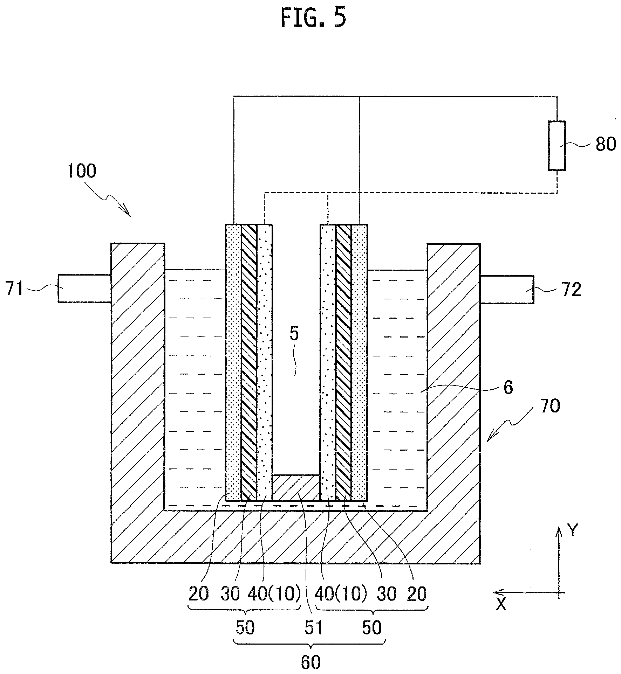

The second diffusion layer 2 includes graphite in which graphene layers are arranged in the direction Y perpendicular to the stacking direction X of the first diffusion layer 1, the second diffusion layer 2, and the oxygen-permeable layer 3. The graphene layers having a six-member carbon ring structure and arranged as described above can ensure higher electrical conductivity in the direction Y, perpendicular to the stacking direction X, than in the stacking direction X of the first diffusion layer 1, the second diffusion layer 2, and the oxygen-permeable layer 3. Accordingly, as shown in Fig. 5, electrons generated by a local cell reaction can easily communicate between the second diffusion layer 2 and an external circuit 80, so as to further improve the efficiency of the cell reaction. The second diffusion layer 2 is particularly preferably a graphite sheet.

There is a publication, "F. L. LaQue: Marine Corrosion Causes and Prevention, John Wiley and Sons, p.179 (1975)", describing corrosion potentials of various kinds of metals in stationary seawater at normal temperature. This document teaches that the potential of graphite with respect to a standard calomel electrode is +0.3 to +0.2 (V vs. SCE), and the potential of platinum with respect to a standard calomel electrode is +0.25 to +0.18 (V vs. SCE). Namely, graphite has higher corrosion resistance than platinum, and is therefore a superior material for use in the second diffusion layer 2.

The graphite sheet described above can be obtained as follows. First, natural graphite is subjected to chemical treatment with acid, so as to provide inserts between the graphene layers of the graphite. Subsequently, the graphene layers provided with the inserts are rapidly heated at a high temperature, thereby obtaining expanded graphite in which gaps between the graphene layers are expanded by gas pressure due to thermal decomposition of the inserts between the graphene layers. Thereafter, the expanded graphite is pressed and rolled, so as to obtain the graphite sheet. The graphite sheet thus obtained is particularly preferably used as a material for the second diffusion layer 2, since the graphene layers in the graphite are arranged in the direction Y perpendicular to the stacking direction X.

In the electrode 10 of the present embodiment, oxygen transmitted through the first diffusion layer 1 and the oxygen-permeable layer 3 is preferably supplied efficiently to the catalyst 4 in order to ensure stable performance of the electrode 10. The second diffusion layer 2 is thus preferably a porous body having a large number of pores through which oxygen is transmitted.

The second diffusion layer 2 preferably has ISO air permeance in the range of 2.0×10⁻⁵ µm/Pa·s to 0.38 µm/Pa·s. The permeance is an average flow rate of air transmitted per unit area, per unit pressure difference, and per unit time. As the value of the permeance is higher, the air can be transmitted more easily. The second diffusion layer 2 having the permeance in the range described above can supply oxygen sufficiently to the catalyst 4, so as to provide a cathode, a fuel cell, and a water treatment device exhibiting stable performance.

More particularly, the second diffusion layer 2 can be provided with a large number of pores when the ISO air permeance is 2.0×10⁻⁵ µm/Pa·s or greater, so as to improve the oxygen permeability and increase the contact rate between oxygen and the catalyst 4. Further, the second diffusion layer 2 with the ISO air permeance of 0.38 µm/Pa·s or less can ensure strength appropriate for a sheet-like diffusion layer while increasing the oxygen permeability. Although the oxygen permeability increases as the ISO air permeance of the second diffusion layer 2 increases, the density of the second diffusion layer 2 decreases when the ISO air permeance is excessively high. A decrease of the density may lead to insufficient strength. Thus, the ISO air permeance of the second diffusion layer 2 is preferably 0.38 µm/Pa·s or less.

The second diffusion layer 2 more preferably has the ISO air permeance in the range of 7.9×10⁻⁵ µm/Pa·s to 0.38 µm/Pa·s in order to further increase the output power when the electrode 10 is used for a fuel cell. The second diffusion layer 2 particularly preferably has the ISO air permeance in the range of 2.9×10⁻⁴ µm/Pa·s to 0.38 µm/Pa·s. The ISO air permeance of the second diffusion layer 2 may be measured in accordance with Japanese Industrial Standards JIS P8117:2009 (Paper and board-Determination of air permeance and air resistance (medium range): Gurley method).

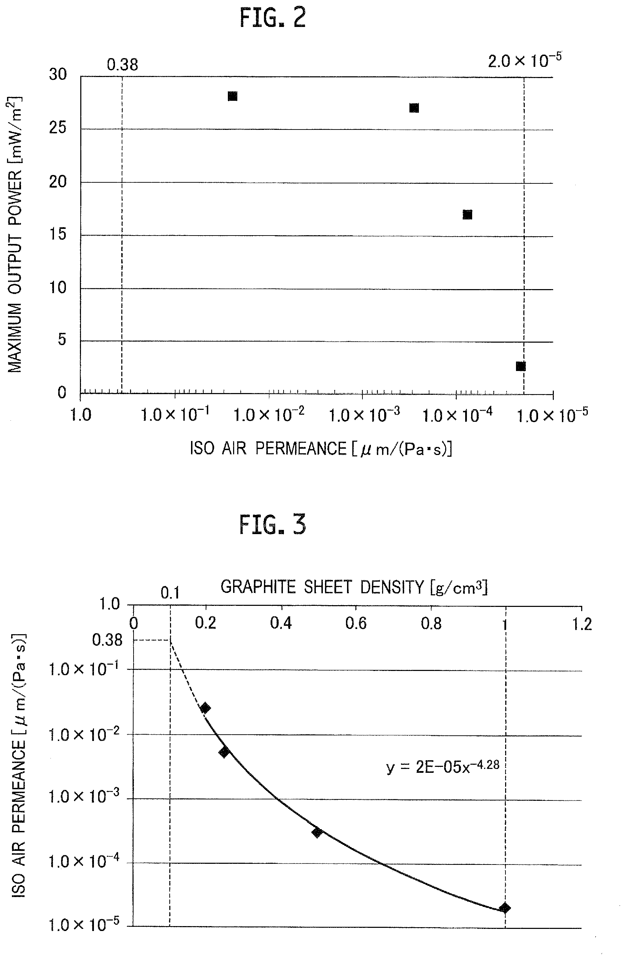

Fig. 2 is a graph illustrating a relationship between the ISO air permeance of the second diffusion layer 2 and a maximum output power of a fuel cell prepared such that a graphite sheet is used as the second diffusion layer 2. As shown in Fig. 2, the maximum output power increases when the ISO air permeance is 2.0×10⁻⁵ µm/Pa·s or greater. The maximum output power is more improved when the ISO air permeance is 7.9×10⁻⁵ µm/Pa·s, and the maximum output power is particularly preferable when the ISO air permeance is 2.9×10⁻⁴ µm/Pa·s or greater. Table 2 indicates specific values of the ISO air permeance of the second diffusion layer 2 and the maximum output power of the fuel cell shown in Fig. 2.

**[Table 2]**

| ISO Air Permeance of Second Diffusion Layer (Graphite Sheet) [µm/Pa•s] | Maximum Output Power of Fuel Cell [mW/m²] |
|---|---|
| 2.12×10⁻⁵ | 2.6 |
| 7.94×10⁻⁵ | 17 |
| 2.99× 10⁻⁴ | 27 |
| 2.48×10⁻² | 28 |

As described above, the second diffusion layer 2 having a porous body enhances the oxygen permeability and easily ensures the stable performance. The second diffusion layer 2 preferably has a density in the range of 0.10 g/cm³ to 1.0 g/cm³. The second diffusion layer 2 with the density of 0.10 g/cm³ or greater can ensure the strength sufficient to keep the sheet-like shape. The ISO air permeance of the second diffusion layer 2 can be set to 2.0×10⁻⁵ µm/Pa·s or greater when the density of the second diffusion layer 2 is 1.0 g/cm³ or less.

Fig. 3 shows a relationship between the density of the graphite sheet as the second diffusion layer 2 and the ISO air permeance. As shown in Fig. 3, when the density of the graphite sheet is 1.0 g/cm³, the ISO air permeance is 2.0×10⁻⁵ µm/Pa·s. As the density of the graphite sheet decreases, the ISO air permeance tends to increase. According to the approximate curve obtained by a least squares method as shown in Fig. 3, the ISO air permeance is 0.38 µm/Pa·s when the density of the graphite sheet is 0.10 g/cm³. In view of the minimum value of the density (0.10 g/cm³) of the second diffusion layer 2, the maximum value of the ISO air permeance is preferably 0.38 µm/Pa·s. Table 3 indicates specific values of the density of the graphite sheet and the ISO air permeance shown in Fig. 3.

**[Table 3]**

| Density of Second Diffusion Layer (Graphite Sheet) [g/cm³] | ISO Air Permeance of Second Diffusion Layer (Graphite Sheet) [µm/Pa•s] |
|---|---|
| 1.0 | 2.12×10⁻⁵ |
| 0.5 | 2.99×10⁻⁴ |
| 0.25 | 5.24×10⁻³ |
| 0.2 | 2.48 ×10⁻² |

The carbon material sheet composing the second diffusion layer 2 may have at least one or more penetration holes, in a supporting portion supporting the catalyst 4, in the stacking direction X of the first diffusion layer 1, the second diffusion layer 2, and the oxygen-permeable layer 3. The carbon material sheet provided with penetration holes can supply oxygen transmitted through the first diffusion layer 1 and the oxygen-permeable layer 3 to the catalyst 4 more efficiently.

The second diffusion layer 2 preferably has electrical resistivity of 20 µΩ·m or lower in the direction Y perpendicular to the stacking direction X of the first diffusion layer 1, the second diffusion layer 2, and the oxygen-permeable layer 3. In addition, the electrical resistivity of the second diffusion layer 2 in the stacking direction X of the first diffusion layer 1, the second diffusion layer 2, and the oxygen-permeable layer 3 is preferably at least 100 times as high as the electrical resistivity in the direction Y perpendicular to the stacking direction X. When the electrical resistivity is defined as described above, electrons generated by a local cell reaction can communicate between the second diffusion layer 2 and the external circuit 80 more easily. The lower limit of the electrical resistivity of the second diffusion layer 2 in the direction Y perpendicular to the stacking direction X is preferably, but not necessarily, 0.10 µΩ·m or higher. The upper limit of the electrical resistivity of the second diffusion layer 2 in the stacking direction X may be, but not limited to, at most 1000 times as high as the electrical resistivity in the direction Y perpendicular to the stacking direction X. The electrical resistivity may be measured by a four-point probe method, for example.

According to the present embodiment, the second diffusion layer 2 supports the catalyst 4. As shown in Fig. 1, the second diffusion layer 2 supports, on the surface thereof, the catalyst 4 for promoting a local cell reaction described below. The support of the catalyst 4 can promote the reaction between oxygen transmitted through the oxygen-permeable layer 3 and hydrogen ions transmitted to the second diffusion layer 2 through an ion transfer layer described below, and increase the efficiency of reduction reaction of the oxygen, so as to exhibit the cell reaction more efficiently.

The catalyst 4 supported on the second diffusion layer 2 is preferably an oxygen reduction catalyst. The support of the oxygen reduction catalyst can further enhance the rate of the reaction between the oxygen transmitted through the oxygen-permeable layer 3 and the hydrogen ions. The oxygen reduction catalyst preferably, but not necessarily, includes platinum. The oxygen reduction catalyst may also include carbon particles doped with nonmetal atoms and metal atoms. The carbon particles may be doped with any atoms. For example, the nonmetal atoms may be nitrogen atoms, boron atoms, sulfur atoms, or phosphorus atoms. The metal atoms may be iron atoms or copper atoms.

The second diffusion layer 2 may support the catalyst 4 on a surface 2b opposite to a surface 2a toward the oxygen-permeable layer 3. As shown in Fig. 1, the surface 2b of the second diffusion layer 2 may be covered with slurry of the catalyst 4, so as to provide a coating film including the catalyst 4. Alternatively, the catalyst 4 and a support sheet may be combined together to prepare a catalyst sheet and then joined to the second diffusion layer 2, in order to improve adhesion between the second diffusion layer 2 and the catalyst 4 and enhance the oxygen reduction reaction for a long period of time. More particularly, an electrically conductive support sheet is impregnated with slurry containing the catalyst 4 and then dried, thereby preparing a catalyst sheet. Thereafter, the catalyst sheet thus obtained is placed on the surface 2b of the second diffusion layer 2, so as to support the catalyst 4 thereon. The support sheet may be an electrically conductive nonwoven fabric, for example. The support sheet may also be one material selected from the group consisting of the carbon paper, the carbon cloth, and the graphite sheet described above.

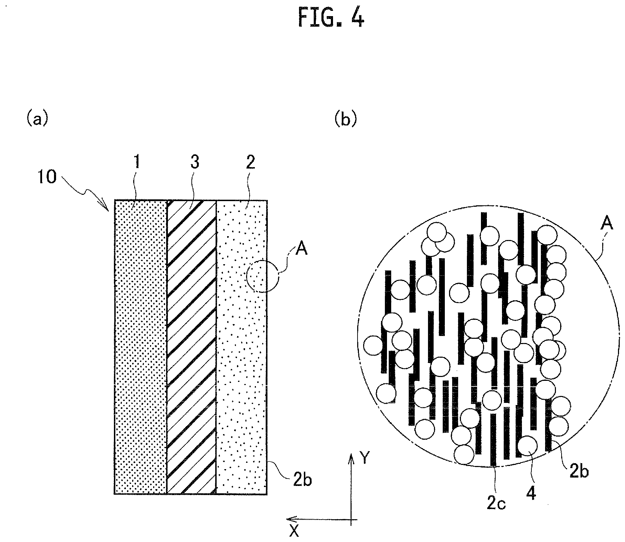

The catalyst 4 and the material included in the second diffusion layer 2 may also be a complex so as to improve the adhesion between the second diffusion layer 2 and the catalyst 4. In particular, as shown in Fig. 4, the second diffusion layer 2 including graphite may support the catalyst 4 between graphene layers 2c in the graphite. The catalyst 4 supported between the graphene layers 2c can be prevented from being desorbed from the second diffusion layer 2. Since the catalyst 4 is dispersed in a particle state in the second diffusion layer 2, the oxygen transmitted through the oxygen-permeable layer 3 and the hydrogen ions can easily be brought into contact with the surface of the catalyst 4, so as to further promote the oxygen reduction reaction.

### (Oxygen-permeable layer)

As shown in Fig. 1, the electrode 10 further includes the oxygen-permeable layer 3 having oxygen permeability and interposed between the first diffusion layer 1 and the second diffusion layer 2. The oxygen-permeable layer 3 having oxygen permeability functions to supply oxygen to the surface 2a of the second diffusion layer 2.

The oxygen-permeable layer 3 may include any material which has oxygen permeability and preferably has water repellency. The material used for the oxygen-permeable layer 3 may be at least one of silicone rubber and poly(dimethylsiloxane). These materials have high oxygen permeability due to the properties of high oxygen solubility and oxygen diffusibility derived from a molecular structure of silicone. These materials also have high water repellency because surface free energy is small. The oxygen-permeable layer 3 therefore particularly preferably includes silicone.

The material used for the oxygen-permeable layer 3 may be at least one compound selected from the group consisting of ethyl cellulose, poly-4-methylpentene-1, polybutadiene, polytetrafluoroethylene, and butyl rubber. These materials are also preferable due to the properties of high oxygen permeability and water repellency.

The material used for the oxygen-permeable layer 3 may also be a nonwoven fabric such as a waterproof and breathable film or a nonwoven fabric of polyethylene or polypropylene. More particularly, the material used for the oxygen-permeable layer 3 may be Gore-Tex (registered trademark) in which an expanded polytetrafluoroethylene film and a polyurethane polymer are combined together.

The oxygen-permeable layer 3 is preferably in contact with the second diffusion layer 2, as shown in Fig. 1, in order to efficiently supply oxygen to the surface 2a of the second diffusion layer 2. More particularly, the surface 3b of the oxygen-permeable layer 3 is preferably opposed to and in contact with the surface 2a of the second diffusion layer 2. The oxygen is therefore directly supplied to the surface 2a of the second diffusion layer 2 and further reaches the catalyst 4 through the second diffusion layer 2, so as to easily promote the local cell reaction described below. A gap may be provided between the surface 3b of the oxygen-permeable layer 3 and the surface 2a of the second diffusion layer 2, as long as the oxygen is supplied to the surface 2a of the second diffusion layer 2.

The oxygen-permeable layer 3 preferably has water repellency. The oxygen-permeable layer 3 is therefore preferably a water repellent sheet. As described below, the oxygen-permeable layer 3 is arranged to separate the gas phase 5 containing oxygen from a liquid 6 to be treated as a liquid phase stored in a wastewater tank. The term "separation" as used herein refers to physical isolation. The oxygen-permeable layer 3 can prevent organic matter or a nitrogen-containing compound contained in the liquid 6 from being transmitted to the gas phase 5.

The oxygen-permeable layer 3 can regulate the oxygen permeation amount depending on the material to be used, and prevent an oxygen molecule on the gas phase 5 side from being transmitted excessively to the liquid 6 to be treated. This can surely keep the wastewater tank in anaerobic condition so as to avoid the presence of oxygen, as described below. Since propagation of aerobic microorganisms in the wastewater tank can be suppressed, the liquid treatment can surely be performed in the anaerobic condition.

As described above, the electrode 10 according to the present embodiment includes the first diffusion layer 1 having water repellency, the second diffusion layer 2 supporting the catalyst 4, and the oxygen-permeable layer 3 having oxygen permeability and interposed between the first diffusion layer 1 and the second diffusion layer 2, the second diffusion layer 2 including a sheet-like carbon material. The sheet-like carbon material used for the second diffusion layer 2 can prevent corrosion when the electrode 10 is applied to a fuel cell. Since the carbon material has substantially the same electrical resistivity as metal, both an increase in internal resistance in association with an increase in size of the electrode 10 and a decrease of productivity of electrical energy can be prevented. As described below, a membrane electrode assembly capable of preventing water immersion can be prepared such that the first diffusion layer 1 and the oxygen-permeable layer 3 having water repellency are joined to the second diffusion layer 2. Accordingly, the membrane electrode assembly can exhibit high battery performance when oxygen in the atmosphere is supplied thereto.

### [Fuel cell]

Next, a fuel cell according to the present embodiment will be described below. As shown in Fig. 5, a fuel cell 100 according to the present embodiment includes an anode 20 supporting microorganisms, an ion transfer layer 30 through which hydrogen ions are transmitted, and a cathode 40 which is the electrode 10 described above and separated from the anode 20 with the ion transfer layer 30 interposed therebetween.

The anode 20 includes an electrically conductive sheet supporting microorganisms. The electrically conductive sheet may be at least one kind selected from the group consisting of an electrically conductive porous sheet, an electrically conductive woven sheet, and an electrically conductive nonwoven sheet. The electrically conductive sheet may also be a stacked body including a plurality of sheets stacked on one another. The anode 20 including the electrically conductive sheet having a plurality of pores facilitates the transfer of hydrogen ions generated by a local cell reaction described below toward the ion transfer layer 30, so as to promote the oxygen reduction reaction. The electrically conductive sheet used in the anode 20 is preferably provided with continuous spaces (voids) in the thickness direction, which is the stacking direction X of the electrode 10, the anode 20, and the ion transfer layer 30, in order to improve ion permeability.

The electrically conductive sheet may be a metal plate having a plurality of penetration holes in the thickness direction. A material used for the electrically conductive sheet in the anode 20 may be at least one material selected from the group consisting of electrically conductive metal such as aluminum, copper, stainless steel, nickel and titanium, carbon paper, and carbon felt.

The electrically conductive sheet used in the anode 20 may also be a graphite sheet which can be used in the second diffusion layer 2 of the electrode 10. The anode 20 preferably includes graphite in which graphene layers are arranged along the plane in the direction YZ perpendicular to the stacking direction X of the electrode 10, the anode 20, and the ion transfer layer 30. The graphene layers arranged as described above can ensure higher electrical conductivity in the direction YZ, perpendicular to the stacking direction X, than in the stacking direction X of the electrode 10, the anode 20, and the ion transfer layer 30. Accordingly, electrons generated by the local cell reaction in the anode 20 can easily be transmitted to the external circuit, so as to further improve the efficiency of the cell reaction.

The microorganisms supported on the anode 20 may be any kind that can decompose organic matter or a compound containing nitrogen (a nitrogen-containing compound) contained in a liquid to be treated, and are preferably anaerobic microorganisms not requiring oxygen for propagation, for example. Anaerobic microorganisms do not require air for oxidative decomposition of the organic matter contained in the liquid to be treated. Thus, the amount of electric power necessary to supply air can greatly be reduced. Further, since free energy gained by the microorganisms is small, the amount of sludge produced can be reduced. The microorganisms held in the anode 20 are preferably electricity-producing bacteria having an extracellular electron transfer mechanism, for example. Specific examples of anaerobic microorganisms include Geobacter, Shewanella, Aeromonas, Geothrix, and Saccharomyces.

The fuel cell 100 according to the present embodiment includes the ion transfer layer 30 permeable to hydrogen ions. The ion transfer layer 30 functions to transfer hydrogen ions generated in the anode 20 toward the cathode 40. The ion transfer layer 30 may be an ion exchange membrane including ion exchange resin. Examples of ion exchange resin include Nafion (registered trademark) (available from DuPont Company), and Flemion (registered trademark) and Selemion (registered trademark) (available from Asahi Glass Co., Ltd.).

The ion transfer layer 30 may also be a porous membrane having pores through which hydrogen ions can be transmitted. In other words, the ion transfer layer 30 may be a sheet having spaces (voids) through which hydrogen ions move between the anode 20 and the cathode 40. The ion transfer layer 30 preferably includes at least one kind selected from the group consisting of a porous sheet, a woven sheet, and a nonwoven sheet. Alternatively, the ion transfer layer 30 may be at least one kind selected from the group consisting of a glass fiber membrane, a synthetic fiber membrane, and a plastic nonwoven fabric, or may be a stacked body including a plurality of these membranes stacked on one another. The porous sheet having a plurality of pores as described above allows the hydrogen ions to easily pass therethrough. The pores in the ion transfer layer 30 may have any diameter that can transmit the hydrogen ions from the anode 20 to the cathode 40 therethrough.

The fuel cell 100 according to the present embodiment includes the cathode 40 which is the electrode 10 described above. More particularly, the cathode 40 includes the first diffusion layer 1 having water repellency, the second diffusion layer 2 supporting the catalyst 4, and the oxygen-permeable layer 3 having oxygen permeability and interposed between the first diffusion layer 1 and the second diffusion layer 2. The ion transfer layer 30 is arranged toward the surface 2b of the second diffusion layer 2.

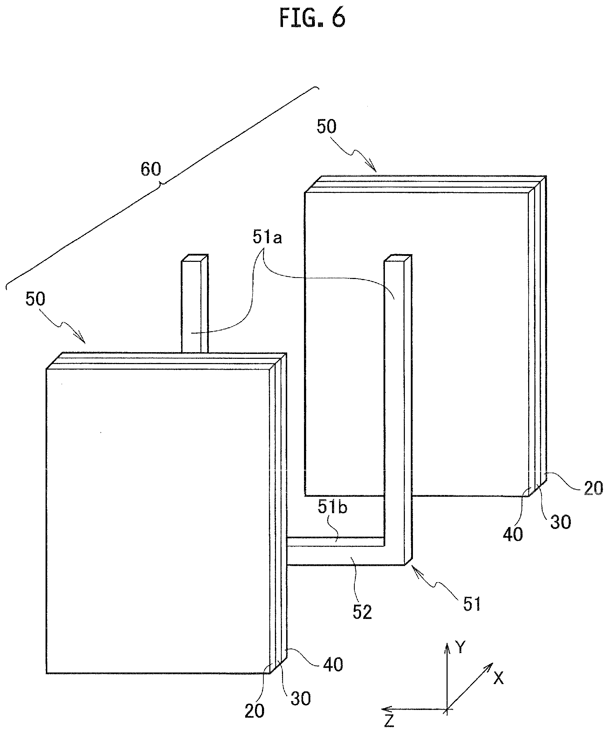

The fuel cell 100 according to the present embodiment includes a plurality of membrane electrode assemblies 50 each including the anode 20, the ion transfer layer 30, and the cathode 40, as shown in Fig. 5. Further, as shown in Figs. 5 and 6, the two membrane electrode assemblies 50 are assembled together via a cassette substrate 51 such that the first diffusion layers 1 of the respective cathodes 40 are opposed to each other. The cassette substrate 51 is a U-shaped frame member open on the upper side and placed along the circumferences of the first diffusion layers 1 of the cathodes 40. In particular, the cassette substrate 51 serves as a frame member in which two first pillar-shaped members 51a are connected at the bottom ends to a second pillar-shaped member 51b. Each side surface 52 of the cassette substrate 51 is joined to the circumference of the surface 1a of the first diffusion layer 1 on the side opposite to the oxygen-permeable layer 3 in the cathode 40, so as to prevent the liquid 6 to be treated from leaking into the inside of the cassette substrate 51 from the circumference of the first diffusion layer 1.

As shown in Fig. 5, a fuel cell unit 60 including the two membrane electrode assemblies 50 and the cassette substrate 51 assembled together is placed in a wastewater tank 70 such that the gas phase 5 communicating with the atmosphere is provided inside the fuel cell unit 60. The liquid 6 to be treated is held in the wastewater tank 70. The anode 20, the ion transfer layer 30, and the second diffusion layer 2 and the catalyst 4 of the cathode 40 are impregnated with the liquid 6. The first diffusion layer 1 included in the cathode 40 is arranged so as to come into contact with the gas containing oxygen, and the second diffusion layer 2 is arranged so as to come into contact with the liquid 6.

As described above, the first diffusion layer 1 and the oxygen-permeable layer 3 in the cathode 40 have water repellency. The inside of the cassette substrate 51 is separated from the liquid 6 to be treated held in the wastewater tank 70, so that the inside space defined by the two membrane electrode assemblies 50 and the cassette substrate 51 serves as the gas phase 5. As shown in Fig. 5, the cathode 40 and the anode 20 are each electrically connected to the external circuit 80.

The wastewater tank 70 holds the liquid 6 to be treated inside thereof, but may have a configuration in which the liquid 6 flows through the wastewater tank 70. For example, as shown in Fig. 5, the wastewater tank 70 may include a liquid supply port 71 from which the liquid 6 is supplied into the wastewater tank 70, and a liquid drain port 72 from which the treated liquid 6 is drained to the outside of the wastewater tank 70.

The wastewater tank 70 is preferably kept in anaerobic condition in which molecular oxygen is not present or the concentration of molecular oxygen present is quite low. Accordingly, the liquid 6 to be treated can be held in the wastewater tank 70 such that the liquid 6 hardly comes into contact with oxygen.

The effects of the fuel cell (microbial fuel cell) 100 according to the present embodiment are described below. When the fuel cell 100 is in operation, the liquid 6 to be treated containing at least one of organic matter and a nitrogen-containing compound is supplied to the anode 20, and air (or oxygen) is supplied to the cathode 40. The air is continuously supplied to the cathode 40 from the opening on the upper side of the cassette substrate 51. The liquid 6 is also preferably continuously supplied to the anode 20 through the liquid supply port 71 and the liquid drain port 72.

In the cathode 40, the air is diffused by the first diffusion layer 1, and oxygen in the air passes through the oxygen-permeable layer 3 and reaches the second diffusion layer 2. In the anode 20, hydrogen ions and electrons are generated, by catalysis of the microorganisms, from the organic matter and/or the nitrogen-containing compound contained in the liquid 6 to be treated. The generated hydrogen ions are transferred through the ion transfer layer 30 toward the cathode 40. The generated electrons are transferred through the electrically conductive sheet of the anode 20 to the external circuit 80, and further transferred to the second diffusion layer 2 of the cathode 40 from the external circuit 80. The hydrogen ions and electrons transferred to the second diffusion layer 2 are bonded to the oxygen due to the reaction of the catalyst 4, so as to turn into water to be consumed. At the same time, electrical energy flowing through a closed circuit is collected by the external circuit 80.

As described above, the second diffusion layer 2 of the cathode 40 includes a sheet-like carbon material, so as to suppress corrosion of the cathode 40 and generate electric power efficiently for a long period of time. Further, the carbon material has substantially the same electrical resistivity as metal, so as to prevent an increase in internal resistance. Since the first diffusion layer 1 and the oxygen-permeable layer 3 having water repellency are joined to the second diffusion layer 2, the electrode hardly permeable to water can be prepared. Accordingly, high battery performance can be exhibited when oxygen in the atmosphere is supplied to the cathode 40.

The anode 20 according to the present embodiment may be modified with an electron transport mediator molecule. Alternatively, the liquid 6 to be treated in the wastewater tank 70 may include an electron transport mediator molecule. The presence of the molecule can promote the transfer of the electrons from the anaerobic microorganisms to the anode 20, so as to implement the liquid treatment with higher efficiency.

More particularly, the communication of the electrons between the anode 20 and cells or a terminal electron acceptor is implemented by a metabolism mechanism of the anaerobic microorganisms. The mediator molecule introduced into the liquid 6 to be treated serves as a terminal electron acceptor and transfers the received electrons to the anode 20. Accordingly, the oxidative decomposition rate of the organic matter and the like in the liquid 6 can be increased. An example of such an electron transport mediator molecule may be, but not limited to, at least one material selected from the group consisting of neutral red, anthraquinone-2,6-disulfonate (AQDS), thionine, potassium ferricyanide, and methyl viologen.

The fuel cell unit 60 shown in Figs. 5 and 6 has a structure in which the two membrane electrode assemblies 50 and the cassette substrate 51 are assembled together, but the present embodiment is not limited to this structure. For example, the membrane electrode assembly 50 may be jointed to only one of the side surfaces 52 of the cassette substrate 51, and the other side surface may be sealed with a plate member. Although the cassette substrate 51 shown in Fig. 6 has the opening entirely open on the upper side, the opening may be open partly, or may be closed, as long as the air (oxygen) can be introduced into the inside of the cassette substrate 51.

### [Water treatment device]

Next, a water treatment device according to the present embodiment will be described below. The water treatment device according to the present embodiment includes the anode 20 supporting microorganisms for purifying a liquid to be treated, the ion transfer layer 30 permeable to hydrogen ions, and the cathode 40 which is the electrode 10 described above and separated from the anode 20 with the ion transfer layer 30 interposed therebetween.

As described above, the fuel cell 100 according to the present embodiment supplies the liquid 6 to be treated containing at least one of the organic matter and the nitrogen-containing compound to the anode 20. The fuel cell 100 then generates carbon dioxide or nitrogen together with hydrogen ions and electrons from the organic matter and/or the nitrogen-containing compound in the liquid 6 by the metabolism of the microorganisms supported on the anode 20.

In particular, for example, when the liquid 6 to be treated includes glucose as organic matter, carbon dioxide, hydrogen ions, and electrons are generated by the local cell reaction shown below.
- Anode 20: C₆H₁₂O₆ + 6H₂O → 6CO₂ + 24H⁺ + 24e⁻
- Cathode 40: 6O₂ + 24H⁺ + 24e⁻ → 12H₂O

When the liquid 6 to be treated includes ammonia as a nitrogen-containing compound, nitrogen, hydrogen ions, and electrons are generated by the local cell reaction shown below.
• Anode 20: 4NH₃ → 2N₂ + 12H⁺ + 12e⁻
• Cathode 40: 3O₂ + 12H⁺ + 12e⁻ → 6H₂O

The water treatment device according to the present embodiment using the fuel cell 100 brings the organic matter and the nitrogen-containing compound in the liquid 6 to be treated into contact with the anode 20 so as to cause oxidative decomposition, thereby purifying the liquid 6. As described above, the wastewater tank 70 may be provided with the liquid supply port 71 for supplying the liquid 6 to the wastewater tank 70 and the liquid drain port 72 for draining the treated liquid 6 from the wastewater tank 70, so as to continuously supply the liquid 6 to the wastewater tank 70. Accordingly, the liquid 6 is continuously brought into contact with the anode 20 so as to be treated efficiently.

While the present embodiment has been described above, the present embodiment is not intended to be limited to the descriptions thereof, and various modifications will be made within the scope of the present embodiment. For example, as shown in Fig. 6, the anode 20, the ion transfer layer 30, and the cathode 40 which is the electrode 10 including the first diffusion layer 1, the second diffusion layer 2, and the oxygen-permeable layer 3 are each formed into a rectangular shape. However, the shape of these layers is not particularly limited, and may be changed as appropriate depending on the size of a fuel cell and the properties of preferred power generation performance and purification performance. The area of the respective layers may also be changed as appropriate as long as these layers can exhibit preferred performance.

The electrode according to the present invention includes the sheet-like carbon material used in the diffusion layer, so as to suppress corrosion and decrease electrical resistance to a low level. Since the carbon material has substantially the same electrical resistivity as metal, both an increase in internal resistance in association with an increase in size of the electrode and a decrease of productivity of electrical energy can be prevented.

### REFERENCE SIGNS LIST

- 1: FIRST DIFFUSION LAYER
- 2: SECOND DIFFUSION LAYER
- 3: OXYGEN-PERMEABLE LAYER
- 4: CATALYST
- 6: LIQUID TO BE TREATED
- 10: ELECTRODE
- 20: ANODE
- 30: ION TRANSFER LAYER
- 40: CATHODE
- 100: FUEL CELL

## Claims

1. An electrode comprising:
a first diffusion layer (1) having water repellency;
a second diffusion layer (2) supporting a catalyst (4) thereon; and
an oxygen-permeable layer (3) having oxygen permeability and interposed between the first diffusion layer (1) and the second diffusion layer (2),
the second diffusion layer (2) including a sheet-like carbon material,
wherein:
the second diffusion layer (2) includes graphite; and
graphene layers in the graphite are arranged in a direction perpendicular to a stacking direction of the first diffusion layer (1), the second diffusion layer (2), and the oxygen-permeable layer (3).

2. The electrode according to claim 1, wherein the second diffusion layer (2) has ISO air permeance in a range of 2.0×10⁻⁵ µm/Pa·s to 0.38 µm/Pa·s.

3. The electrode according to claim 1 or 2, wherein the second diffusion layer (2) has a density in a range of 0.10 g/cm³ to 1.0 g/cm³.

4. The electrode according to any one of claims 1 to 3, wherein the second diffusion layer (2) has electrical resistivity of 20 µΩ·m or lower in a direction perpendicular to a stacking direction of the first diffusion layer (1), the second diffusion layer (2), and the oxygen-permeable layer (3), and has electrical resistivity in the stacking direction of the first diffusion layer (1), the second diffusion layer (2), and the oxygen-permeable layer (3) which is at least 100 times as high as the electrical resistivity in the direction perpendicular to the stacking direction.

5. The electrode according to any one of claims 1 to 4, wherein:
the second diffusion layer (2) includes graphite; and
the catalyst (4) is supported between graphene layers in the graphite.

6. The electrode according to any one of claims 1 to 5, wherein the oxygen-permeable layer (3) includes silicone.

7. The electrode according to any one of claims 1 to 6, wherein the catalyst (4) is an oxygen reduction catalyst.

8. A fuel cell comprising:
an anode (20) supporting microorganisms;
an ion transfer layer (30) permeable to hydrogen ions; and
a cathode (40) being the electrode (10) according to any one of claims 1 to 7 and separated from the anode (20) with the ion transfer layer (30) interposed therebetween.

9. The fuel cell according to claim 8, wherein the first diffusion layer (1) included in the cathode (40) is arranged so as to be brought into contact with gas containing oxygen, and the second diffusion layer (2) is arranged so as to be brought into contact with a liquid (6) to be treated.

10. The fuel cell according to claim 9, wherein the liquid (6) to be treated includes organic matter.

11. The fuel cell according to any one of claims 8 to 10, wherein the anode (20) includes at least one material selected from the group consisting of an electrically conductive porous sheet, an electrically conductive woven sheet, and an electrically conductive nonwoven sheet.

12. The fuel cell according to any one of claims 8 to 11, wherein:
the anode (20) includes graphite; and
graphene layers in the graphite are arranged in a direction perpendicular to a stacking direction of the anode (20), the ion transfer layer (30), and the cathode (40).

13. The fuel cell according to any one of claims 8 to 12, wherein the ion transfer layer (30) includes at least one material selected from the group consisting of a porous sheet, a woven sheet, and a nonwoven sheet.

14. A water treatment device comprising:
an anode (20) supporting microorganisms for purifying a liquid (6) to be treated;
an ion transfer layer (30) permeable to hydrogen ions; and
a cathode (40) being the electrode (10) according to any one of claims 1 to 7 and separated from the anode (20) with the ion transfer layer (30) interposed therebetween.

## Patentansprüche

1. Elektrode, umfassend:
eine erste Diffusionsschicht (1) mit Wasserabweisungsvermögen;
eine zweite Diffusionsschicht (2), die einen Katalysator (4) darauf trägt; und
eine sauerstoffdurchlässige Schicht (3), die Sauerstoffdurchlässigkeit aufweist und zwischen der ersten Diffusionsschicht (1) und der zweiten Diffusionsschicht (2) eingefügt ist,
wobei die zweite Diffusionsschicht (2) ein folienartiges Kohlenstoffmaterial einschließt,
wobei:
die zweite Diffusionsschicht (2) Graphit einschließt; und
Graphenschichten in dem Graphit in einer Richtung senkrecht zu einer Stapelrichtung der ersten Diffusionsschicht (1), der zweiten Diffusionsschicht (2) und der sauerstoffdurchlässigen Schicht (3) angeordnet sind.

2. Elektrode nach Anspruch 1, wobei die zweite Diffusionsschicht (2) eine ISO-Luftdurchlässigkeit in einem Bereich von 2,0×10⁻⁵ µm/Pa·s bis 0,38 µm/Pa·s aufweist.

3. Elektrode nach Anspruch 1 oder 2, wobei die zweite Diffusionsschicht (2) eine Dichte in einem Bereich von 0,10 g/cm³ bis 1,0 g/cm³ aufweist.

4. Elektrode nach einem der Ansprüche 1 bis 3, wobei die zweite Diffusionsschicht (2) einen spezifischen elektrischen Widerstand von 20 µΩ·m oder weniger in einer Richtung senkrecht zu einer Stapelrichtung der ersten Diffusionsschicht (1), der zweiten Diffusionsschicht (2) und der sauerstoffdurchlässigen Schicht (3) aufweist und einen spezifischen elektrischen Widerstand in der Stapelrichtung der ersten Diffusionsschicht (1), der zweiten Diffusionsschicht (2) und der sauerstoffdurchlässigen Schicht (3) aufweist, der mindestens 100-mal so hoch wie der spezifische elektrische Widerstand in der Richtung senkrecht zu der Stapelrichtung ist.

5. Elektrode nach einem der Ansprüche 1 bis 4, wobei:
die zweite Diffusionsschicht (2) Graphit einschließt; und
der Katalysator (4) zwischen Graphenschichten in dem Graphit geträgert ist.

6. Elektrode nach einem der Ansprüche 1 bis 5, wobei die sauerstoffdurchlässige Schicht (3) Silikon einschließt.

7. Elektrode nach einem der Ansprüche 1 bis 6, wobei der Katalysator (4) ein Sauerstoffreduktionskatalysator ist.

8. Brennstoffzelle, umfassend:
eine Anode (20), die Mikroorganismen trägt;
eine Ionentransferschicht (30), die für Wasserstoffionen durchlässig ist; und
eine Kathode (40), die der Elektrode (10) nach einem der Ansprüche 1 bis 7 entspricht und von der Anode (20) durch die dazwischen eingefügte Ionentransferschicht (30) getrennt ist.

9. Brennstoffzelle nach Anspruch 8, wobei die erste Diffusionsschicht (1), die in der Kathode (40) enthalten ist, so angeordnet ist, dass sie mit sauerstoffhaltigem Gas in Kontakt gebracht ist, und die zweite Diffusionsschicht (2) so angeordnet ist, dass sie mit einer zu behandelnden Flüssigkeit (6) in Kontakt gebracht ist.

10. Brennstoffzelle nach Anspruch 9, wobei die zu behandelnde Flüssigkeit (6) organisches Material einschließt.

11. Brennstoffzelle nach einem der Ansprüche 8 bis 10, wobei die Anode (20) mindestens ein Material einschließt, das aus der Gruppe, bestehend aus einer elektrisch leitfähigen porösen Folie, einer elektrisch leitfähigen gewebten Folie und einer elektrisch leitfähigen Vliesfolie, ausgewählt ist.

12. Brennstoffzelle nach einem der Ansprüche 8 bis 11, wobei:
die Anode (20) Graphit einschließt; und
Graphenschichten in dem Graphit in einer Richtung senkrecht zu einer Stapelrichtung der Anode (20), der Ionentransferschicht (30) und der Kathode (40) angeordnet sind.

13. Brennstoffzelle nach einem der Ansprüche 8 bis 12, wobei die Ionentransferschicht (30) mindestens ein Material einschließt, das aus der Gruppe, bestehend aus einer porösen Folie, einer gewebten Folie und einer Vliesfolie, ausgewählt ist.

14. Wasserbehandlungsvorrichtung, umfassend:
eine Anode (20), die Mikroorganismen zum Reinigen einer zu behandelnden Flüssigkeit (6) trägt;
eine Ionentransferschicht (30), die für Wasserstoffionen durchlässig ist; und
eine Kathode (40), die der Elektrode (10) nach einem der Ansprüche 1 bis 7 entspricht und von der Anode (20) durch die dazwischen eingefügte Ionentransferschicht (30) getrennt ist.

## Revendications

1. Electrode comprenant :
une première couche de diffusion (1) ayant un caractère hydrophobe ;
une seconde couche de diffusion (2) supportant un catalyseur (4) sur elle ; et
une couche perméable à l'oxygène (3) ayant une perméabilité à l'oxygène et interposée entre la première couche de diffusion (1) et la seconde couche de diffusion (2),
la seconde couche de diffusion (2) incluant un matériau de carbone de type feuille,
dans laquelle :
la seconde couche de diffusion (2) inclut du graphite ; et
des couches de graphène dans le graphite sont agencées dans une direction perpendiculaire à une direction d'empilement de la première couche de diffusion (1), la seconde couche de diffusion (2) et la couche perméable à l'oxygène (3).

2. Electrode selon la revendication 1, dans laquelle la seconde couche de diffusion (2) a une perméance à l'air ISO dans une plage de 2,0x10⁻⁵ µm/Pa·s à 0,38 µm/Pa·s.

3. Electrode selon la revendication 1 ou 2, dans laquelle la seconde couche de diffusion (2) a une densité dans une plage de 0,10 g/cm³ à 1,0 g/cm³.

4. Electrode selon l'une quelconque des revendications 1 à 3, dans laquelle la seconde couche de diffusion (2) a une résistivité électrique de 20 µΩ·m ou inférieure dans une direction perpendiculaire à une direction d'empilement de la première couche de diffusion (1), la seconde couche de diffusion (2) et la couche perméable à l'oxygène (3), et a une résistivité électrique dans la direction d'empilement de la première couche de diffusion (1), la seconde couche de diffusion (2) et la couche perméable à l'oxygène (3) qui est au moins 100 fois aussi élevée que la résistivité électrique dans la direction perpendiculaire à la direction d'empilement.

5. Electrode selon l'une quelconque des revendications 1 à 4, dans laquelle :
la seconde couche de diffusion (2) inclut du graphite ; et
le catalyseur (4) est supporté entre des couches de graphène dans le graphite.

6. Electrode selon l'une quelconque des revendications 1 à 5, dans laquelle la couche perméable à l'oxygène (3) inclut de la silicone.

7. Electrode selon l'une quelconque des revendications 1 à 6, dans laquelle le catalyseur (4) est un catalyseur de réduction d'oxygène.

8. Pile à combustible comprenant :
une anode (20) supportant des microorganismes ;
une couche de transfert d'ions (30) perméable à des ions hydrogène ; et
une cathode (40) qui est l'électrode (10) selon l'une quelconque des revendications 1 à 7 et séparée de l'anode (20) avec la couche de transfert d'ions (30) interposée entre elles.

9. Pile à combustible selon la revendication 8, dans laquelle la première couche de diffusion (1) incluse dans la cathode (40) est agencée de manière à être amenée en contact avec du gaz contenant de l'oxygène, et la seconde couche de diffusion (2) est agencée de manière à être amenée en contact avec un liquide (6) devant être traité.

10. Pile à combustible selon la revendication 9, dans laquelle le liquide (6) devant être traité inclut de la matière organique.

11. Pile à combustible selon l'une quelconque des revendications 8 à 10, dans laquelle l'anode (20) inclut au moins un matériau sélectionné parmi le groupe constitué d'une feuille poreuse électriquement conductrice, d'une feuille tissée électriquement conductrice et d'une feuille non tissée électriquement conductrice.

12. Pile à combustible selon l'une quelconque des revendications 8 à 11, dans laquelle :
l'anode (20) inclut du graphite ; et
des couches de graphène dans le graphite sont agencées dans une direction perpendiculaire à une direction d'empilement de l'anode (20), la couche de transfert d'ions (30) et la cathode (40).

13. Pile à combustible selon l'une quelconque des revendications 8 à 12, dans laquelle la couche de transfert d'ions (30) inclut au moins un matériau sélectionné parmi le groupe constitué d'une feuille poreuse, d'une feuille tissée et d'une feuille non tissée.

14. Dispositif de traitement d'eau comprenant :
une anode (20) supportant des microorganismes pour purifier un liquide (6) devant être traité ;
une couche de transfert d'ions (30) perméable à des ions hydrogène ; et
une cathode (40) qui est l'électrode (10) selon l'une quelconque des revendications 1 à 7 et séparée de l'anode (20) avec la couche de transfert d'ions (30) interposée entre elles.
